# EUROPÄISCHE PATENTSCHRIFT

(11) **EP 3 477 188 B1**
(45) Veröffentlichungstag und Bekanntmachung des Hinweises auf die Patenterteilung: **03.04.2024**
(21) Anmeldenummer: 18201005.8
(22) Anmeldetag: 17.10.2018
(51) Int. Cl.: F21S 43/239, F21S 43/245, F21S 43/249, B60Q 3/62, F21V 8/00, G09F 13/18, F21S 10/00

(54) **KRAFTFAHRZEUG-BELEUCHTUNGSEINRICHTUNG MIT EINER LICHTLEITER-ANORDNUNG**
MOTOR VEHICLE ILLUMINATION DEVICE WITH A LIGHT CONDUCTOR ARRANGEMENT
DISPOSITIF D'ÉCLAIRAGE DE VÉHICULE AUTOMOBILE DOTÉ D'UN DISPOSITIF CONDUCTEUR DE LUMIÈRE

(30) Priorität: 17.10.2017 DE 202017106281 U
(43) Veröffentlichungstag der Anmeldung: 01.05.2019
(73) Patentinhaber: Marelli Automotive Lighting Reutlingen (Germany) GmbH, 72762 Reutlingen (DE)
(72) Erfinder: GEBAUER, Matthias, 72770 Reutlingen (DE)
(74) Vertreter: DREISS Patentanwälte PartG mbB

(56) Entgegenhaltungen:
- EP-A1- 0 962 693
- EP-B1- 1 906 219
- DE-A1-102006 017 067
- DE-A1-102009 005 351
- DE-A1-102011 016 000
- JP-A- 2001 166 715
- JP-A- 2002 297 068
- JP-A- 2005 091 716
- JP-A- 2017 079 163
- US-A- 1 930 359
- US-A1- 2006 044 825
- US-A1- 2007 171 674
- US-A1- 2009 219 734
- US-A1- 2010 124 074
- US-A1- 2015 316 227
- US-A1- 2016 320 550

## Beschreibung

Die vorliegende Erfindung betrifft eine Beleuchtungseinrichtung eines Kraftfahrzeugs gemäß Anspruch 1.

Eine Anordnung mit mehreren gestapelten kantenbeleuchteten lichtdurchlässigen Platten zur Erzeugung von dreidimensionalen Effekten ist aus US 2010/124074 A1 bekannt.

Plattenförmige Lichtleiter, die als sog. Lichtvorhänge eingesetzt werden, sind bspw. aus der EP 1 434 000 B1 bekannt. Das von einem solchen Lichtleiter ausgesandte Licht wird in der Regel zur Erzeugung einer Signallichtfunktion verwendet. Und selbst wenn man mit dem von einem solchen Lichtleiter ausgesandten Licht ein Muster oder ein Objekt darstellen würde, wäre dies allenfalls zweidimensional.

Zur Erzeugung dreidimensionaler Muster oder Objekte werden im Stand der Technik derzeit massive, einteilige, relativ dicke Lichtleiter-Körper verwendet, in die bspw. mittels eines Lasers, eine dreidimensionale Auskoppelstruktur eingebracht wird, die das in den Lichtleiter-Körper eingekoppelte Licht auskoppelt und so einen dreidimensionalen Effekt des durch das ausgekoppelte Licht erzeugten Musters oder Objekts bewirkt. Nachteilig ist dabei jedoch, dass der massive, einteilige Lichtleiter-Körper sehr schwierig in der Herstellung ist, da es beim Aushärten des Lichtleiter-Materials zu unkontrollierbaren und nicht genau vorhersehbaren Schrumpfungen kommen kann, so dass die Maße des fertigen Lichtleiter-Körpers stochastische Abweichungen von vorgegebenen Maßen aufweisen. Zudem ist das Einbringen der dreidimensionalen Auskoppelstruktur kompliziert, zeitaufwendig und teuer.

Eine Lichtleiter-Anordnung und eine Beleuchtungseinrichtung eines Kraftfahrzeugs der eingangs genannten Art sind bspw. aus der WO 2014/105424 A2 bekannt. Dort dient das von jedem der plattenförmigen Lichtleiter ausgesandte Licht zur Erzeugung einer bestimmten Signallichtfunktion, z.B. Rücklicht, Bremslicht, Rückfahrlicht oder Blinklicht. Außerdem ist bei einem Blick auf die Lichtleiter-Anordnung von außerhalb des Kraftfahrzeugs hinter der Anordnung ein Reflexionselement angeordnet, das auftreffendes Licht reflektiert. Auf dem Reflexionselement kann ein Muster angeordnet sein, das durch die transparente Lichtleiter-Anordnung von außen sichtbar ist. Dieses Muster ist jedoch nur bei ausgeschalteten Lichtquellen sichtbar.

Die JP 2017 079163 A betrifft eine Signalleuchte für Kraftfahrzeuge, die einen hohen Aufmerksamkeitswert aufweisen soll. Der hohe Aufmerksamkeitswert wird durch Einschalten und Ausschalten von Lichtquellen erzielt, wodurch eine scheinbar dreidimensionale Bewegung von Licht (stereoscopic light movement in the depth direction) erzeugt wird, das von lichtemittierenden gestapelten Lichtleiterplatten ausgeht.

Die JP 2001 166715 A zeigt ein Display Device mit mehreren in einer Lichtaustrittsrichtung hintereinander angeordneten Lichtleiterplatten. Die JP 2005 091716 A zeigt ein Display mit mehreren hintereinander angeordneten und kantenbeleuchteten Panels.

Die DE 10 2011 016 000 A1 zeigt eine Leuchtvorrichtung, mit der Fahrzeuginsassen optisch informiert werden können. Dazu wird eine Leuchtvorrichtung mit mehreren flachen Lichtleitelementen die zu einer Schichtanordnung hintereinander angeordnet sind, bereitgestellt. Die einzelnen Lichtleitelemente berühren sich nicht und sind deutlich voneinander beabstandet. Jedes der Lichtleitelemente weist ein lichtstreuendes Strukturelement auf, mit dem Licht aus den Lichtleitelementen ausgekoppelt wird.

Die US 1 930 359 A zeigt nebeneinander angeordnete Lichtleiterplatten. Die Lichtleiterplatten werden von ihrer Kante her beleuchtet. Sie erzeugen eine Seitenansicht eines Hundes, wobei die eine Platte einen anderen Bewegungszustand zeigt als die andere Platte. Durch Variieren der Beleuchtung wird eine Bewegungsanimation erzeugt, bei der abwechselnd die eine und die andere Seitenansicht sichtbar ist.

Die EP 0962 693 A1 zeigt einen Lichtleiterplattenstapel mit einer kantenseitigen Beleuchtung, mit der jeweils nur eine Kante beleuchtbar ist. Durch Variation der Beleuchtung von Kante zu Kante können sequenziell mehrere Motive, jeweils eines pro Platte, dargestellt werden.

Die JP 2002 297068 A zeigt ebenfalls einen Stapel kantenbeleuchteter Lichtleiter. Die Lichtleiter tragen ein Pfeilmotiv, das an jeder Platte an einem anderen Ort angeordnet ist. Durch sequenzielles Anschalten und Ausschalten der Lichtquellen kann eine Bewegung der Pfeile animiert werden.

Die Druckschrift US 2007/171674 A1 zeigt ebenfalls einen Stapel kantenbeleuchteter Lichtleiterplatten. Hier können die Lichtleiterplatten sowohl einzeln als auch gemeinsam beleuchtet werden. Damit sollen visuelle Effekte einschließlich Bewegung, dreidimensionale Erscheinungsbilder, Hervorhebungen, Blinkeffekte erzielt werden.

Ausgehend von dem beschriebenen Stand der Technik liegt der vorliegenden Erfindung die Aufgabe zugrunde, eine kostengünstige und einfach realisierbare Möglichkeit zur Verfügung zu stellen, durch eine Lichtleiter-Anordnung ein dreidimensionales Objekt darzustellen.

Zur Lösung dieser Aufgabe wird ausgehend von der Lichtleiter-Anordnung der eingangs genannten Art vorgeschlagen, dass die Form, Größe, Tiefe und/oder Dichte der über die Auskoppelflächen der Lichtleiter verteilt angeordneten Auskoppelelemente für jeden der Lichtleiter derart ausgebildet sind, dass das über die Auskoppelelemente eines Lichtleiters ausgekoppelte und über die Austrittsfläche des Lichtleiters austretende Licht eine Schnittdarstellung durch ein dreidimensionales Objekt darstellt, wobei das Licht der verschiedenen Lichtleiter verschiedene Schnittdarstellungen des Objekts und die Summe des aus allen Lichtleitern der Anordnung austretenden Lichts und damit eine Überlagerung der Schnittdarstellungen näherungsweise eine dreidimensionale Darstellung des Objekts darstellt.

Der Vorteil der erfindungsgemäßen Beleuchtungseinrichtung eines Kraftfahrzeugs besteht darin, dass die einzelnen plattenförmigen Lichtleiter mit hoher Genauigkeit kostengünstig bspw. mittels eines Spritzgussverfahrens hergestellt werden können. Die Lichtleiter-Anordnung bietet als eine einfach realisierbare und kostengünstige Möglichkeit, durch das austretende Licht ein dreidimensionales Muster oder Objekt darzustellen. Gemäß der Erfindung ergibt sich das dreidimensionale Muster oder Objekt durch eine Überlagerung des von den einzelnen Lichtleitern bei eingeschalteten Lichtquellen ausgesandten Lichts. Dabei kann das dreidimensionale Objekt oder Muster umso genauer dargestellt werden, je mehr Lichtleiter in der Anordnung hintereinander angeordnet sind und somit je mehr Schnitte des Objekts oder Musters überlagert werden.

Durch eine Variation der Form, Tiefe, Größe und/oder Dichte der über die Auskoppelfläche verteilt angeordneten Auskoppelelemente eines jeden Lichtleiters kann die Helligkeit des ausgesandten Lichts für definierte Flächenbereiche der Austrittsfläche variiert werden. Die durch das Licht eines Lichtleiters erzeugte Darstellung des Schnitts des dreidimensionalen Objekts oder Musters weist also vorzugsweise nach Art einer Graustufen-Darstellung Bereiche unterschiedlicher Helligkeiten auf. Wenn die Auskoppelelemente bspw. als spitz zulaufende Vertiefungen in der Auskoppelfläche oder als ein spitz zulaufender Vorsprung auf der Auskoppelfläche ausgebildet sind, können diese die Form eines Tetraeders (dreieckige Grundfläche), einer Pyramide (rechteckige Grundfläche), eines Prismas (rechteckige Grundfläche), eines Konus (elliptische oder kreisförmige Grundfläche) oder einer Halbkugel (runde oder elliptische Grundfläche) aufweisen. Die Größe der Grundfläche der Auskoppelelemente kann variiert werden, um die Helligkeit im Bereich der Auskoppelelemente bzw. dem entsprechenden Bereich der Austrittsfläche zu verändern. Die Tiefe eines Auskoppelelements ist der Abstand zwischen der Flächenerstreckung der Auskoppelfläche um das Auskoppelelement herum bis zur Spitze der Vertiefung bzw. des Vorsprungs. Auch eine Variation der Tiefe der Auskoppelelemente hat Auswirkungen auf die Helligkeit des ausgekoppelten bzw. austretenden Lichts im Bereich dieser Auskoppelelemente bzw. dem entsprechenden Bereich der Austrittsfläche. Durch Variation des Abstands von benachbarten Auskoppelelementen bzw. deren Grundflächen zueinander (Variation der Dichte der Auskoppelelemente) kann ebenfalls die Helligkeit des ausgekoppelten Lichts im Bereich dieser Auskoppelelemente bzw. in dem entsprechenden Bereich der Austrittsfläche verändert werden.

Wenn die Form, Tiefe und Größe der über die Auskoppelfläche verteilt angeordneten Auskoppelelemente konstant bleibt und lediglich die Dichte der Auskoppelelemente auf der Auskoppelfläche variiert wird, hat dies den Vorteil, dass alle Auskoppelelemente gleich ausgebildet werden können und dass eine Veränderung der Helligkeit des ausgekoppelten bzw. austretenden Lichts nur durch eine Variation des Abstands von benachbarten Auskoppelelementen bzw. deren Grundflächen (der Dichte) erzielt wird. Bereiche, die heller erscheinen sollen, haben eine höhere Dichte der Auskoppelstruktur. Bereiche, die dunkler erscheinen sollen, haben eine geringere Dichte.

Durch die unterschiedliche Ausgestaltung der Auskoppelelemente können mindestens zwei Helligkeitsniveaus (entspricht einer schwarz-weiß Darstellung des dreidimensionalen Objekts), vorzugsweise jedoch mehr Helligkeitsniveaus des ausgekoppelten bzw. ausgetretenen Lichts realisiert werden. Die hintereinander angeordneten Lichtleiter können gleich ausgebildet sein. Vorzugsweise sind sie jedoch unterschiedlich ausgebildet, um eine möglichst realistische Darstellung des dreidimensionalen Objekts realisieren zu können. Die Lichtquellen sind entlang einer oder mehrerer Seitenflächen der Lichtleiter angeordnet. Die Lichtquellen können Licht unterschiedlicher Farbe aussenden. Vorzugsweise senden die Lichtquellen eines Lichtleiters alle Licht der gleichen Farbe aus. Die Lichtquellen unterschiedlicher Lichtleiter können jedoch Licht unterschiedlicher Farben aussenden. Es wäre aber auch denkbar, dass die Lichtquellen eines Lichtleiters Licht mindestens zweier unterschiedlicher Farben aussenden und sich die Farbe des aus dem Lichtleiter ausgekoppelten bzw. austretenden Lichts und damit auch die Farbe des dargestellten Schnitts durch das Objekt oder Muster durch additive Farbmischung des Lichts der mindestens zwei Farben ergibt. Es wäre auch denkbar, die Lichtquellen eines Lichtleiters wechselweise zu betreiben, bspw. zu bestimmten Zeitpunkten nur die Lichtquellen einer ersten Farbe (z.B. rot) und zu anderen Zeitpunkten nur die Lichtquellen einer anderen Farbe (z.B. weiß, gelb oder blau). Schließlich ist es auch denkbar, dass eine einzelne Lichtquelle Licht unterschiedlicher Farbe aussenden kann. Alle Lichtquellen der Anordnung können dimmbar ausgebildet und entsprechend angesteuert sein, dass sie je nach Ansteuerung Licht einer bestimmten Helligkeit aussenden.

Die Lichtquellen sind vorzugsweise als Halbleiterlichtquellen, insbesondere als Leuchtdioden (LEDs) ausgebildet. Die mindestens eine Schmalseite eines Lichtleiters, vor der die Lichtquellen angeordnet sind, dient als Eintrittsfläche des Lichtleiters. Den entlang der Eintrittsfläche des Lichtleiters angeordneten Lichtquellen können Bündelungsoptiken zugeordnet sein, um das von den Lichtquellen ausgesandte Licht zu bündeln bzw. zu kollimieren bevor es auf die Eintrittsfläche des Lichtleiters fällt. Alternativ wäre es auch denkbar, dass die Bündelungsoptiken integraler Bestandteil der Eintrittsfläche sind. Die Bündelungsoptiken können bspw. als Vorsatzoptiken aus einem massiven transparenten Material ausgebildet sein, in die Licht der Lichtquellen eingekoppelt und durch Brechung an der Eintrittsfläche und/oder der Austrittsfläche sowie durch Totalreflexion an seitlichen Grenzflächen gebündelt wird. Auch eine Bündelung des Lichts mittels Spiegelreflexion an einer Reflexionsfläche kleiner Reflektoren wäre denkbar.

Die Erfindung betrifft eine Kraftfahrzeugbeleuchtungseinrichtung. Eine solche Beleuchtungseinrichtung ist vorzugsweise als eine Heckleuchte eines Kraftfahrzeugs ausgebildet. Das durch das ausgesandte Licht der Lichtleiter-Anordnung erzeugte Licht kann bspw. zur Realisierung einer Designfunktion im Heckbereich des Fahrzeugs genutzt werden. Dabei wäre es denkbar, dass das von der Lichtleiter-Anordnung ausgesandte Licht ein dreidimensionales Objekt mit Ähnlichkeit zu dem Kraftfahrzeug darstellt, in dem die Heckleuchte eingebaut ist. Die Lichtleiteranordnung könnte aber auch vorne an einem Kraftfahrzeug, bspw. zur Erzeugung eines Positionslichts, oder seitlich an einem Kraftfahrzeug, bspw. zur Erzeugung eines Sidemarker-Lichts, oder im Innenraum als Innenraum- oder Ambientebeleuchtung angeordnet sein.

Weitere Merkmale und Vorteile der vorliegenden Erfindung werden nachfolgend anhand der Figuren näher erläutert. Es zeigen:
- Figur 1: eine erfindungsgemäße Beleuchtungseinrichtung in schematischer Darstellung in einer bevorzugten Ausführungsform;
- Figur 2a: einen plattenförmigen Lichtleiter der Beleuchtungseinrichtung aus Figur 1 in einem Längsschnitt;
- Figur 2b: einen plattenförmigen Lichtleiter der Beleuchtungseinrichtung aus Figur 1 in einer perspektivischen Ansicht;
- Figur 3a: einen Querschnitt durch ein Auskoppelelement des Lichtleiters aus Figur 2 gemäß einer ersten Ausgestaltung;
- Figur 3b: einen Querschnitt durch ein Auskoppelelement des Lichtleiters aus Figur 2 gemäß einer zweiten Ausgestaltung;
- Figur 4a: ein dreidimensionales Objekt, das mit der erfindungsgemäßen Beleuchtungseinrichtung dargestellt werden soll;
- Figur 4b: eine Darstellung des dreidimensionalen Objekts, die mit der erfindungsgemäßen Beleuchtungseinrichtung dargestellt wird;
- Figur 5: eine erfindungsgemäße Beleuchtungseinrichtung in einem in ein Kraftfahrzeug eingebauten Zustand in einer bevorzugten Ausführungsform; und
- Figur 6: einen Ausschnitt der erfindungsgemäßen Lichtleiter-Anordnung aus Figur 1.

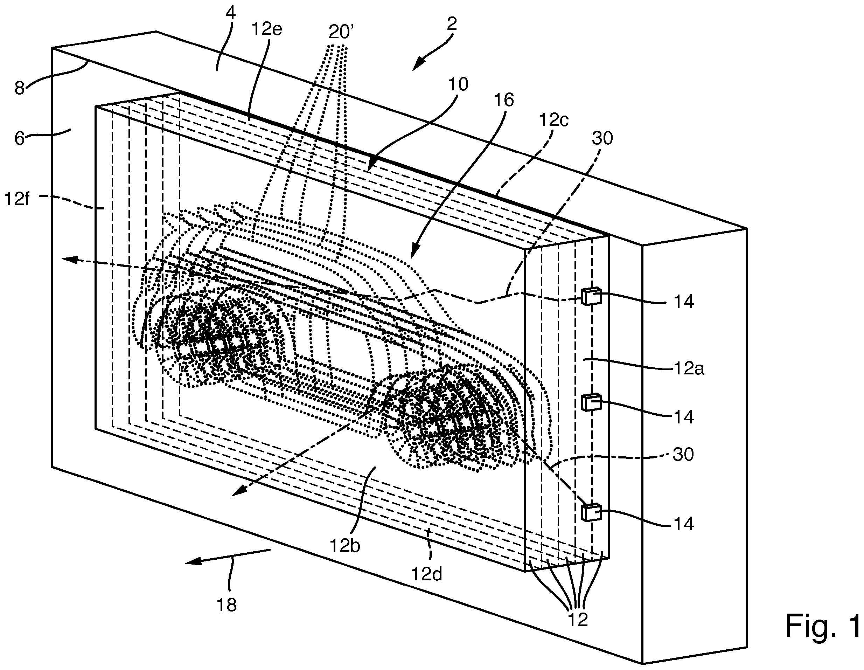

In Figur 1 ist eine erfindungsgemäße Beleuchtungseinrichtung eines Kraftfahrzeugs in ihrer Gesamtheit mit dem Bezugszeichen 2 bezeichnet. Die Beleuchtungseinrichtung 2 ist bspw. als eine Kraftfahrzeugheckleuchte ausgebildet und umfasst ein Gehäuse 4 mit einer mittels einer Abdeckscheibe 6 verschlossenen Lichtaustrittsöffnung 8. Ferner umfasst die Beleuchtungseinrichtung 2 eine in dem Gehäuse 4 angeordnete Lichtleiter-Anordnung 10, die mehrere hintereinander angeordnete plattenförmige Lichtleiter 12 aus einem massiven, transparenten Material aufweist. In dem dargestellten Beispiel sind fünf Lichtleiter 12 hintereinander angeordnet. Selbstverständlich können auch weniger oder mehr als fünf Lichtleiter 12 hintereinander angeordnet werden und die Lichtleiter-Anordnung 10 bilden. Ferner haben die Lichtleiter 12 in dem Beispiel eine ebene rechteckige Flächenerstreckung. Selbstverständlich wäre es auch denkbar, dass die Lichtleiter 12 eine von der Rechteckform abweichende andere Form aufweisen. Ebenso wäre es denkbar, dass die Flächenerstreckung der Lichtleiter 12 gebogen oder gewölbt ist, bspw. um eine gemeinsame imaginäre Biegeachse, die bspw. vertikal oder horizontal verläuft. Durch eine gewölbte Flächenerstreckung wäre es möglich, bspw. bei ebenfalls gewölbter Abdeckscheibe 6, dass die Lichtleiter-Anordnung 10 dem Flächenverlauf der Abdeckscheibe 6 folgt und über den gesamten Flächenverlauf der Lichtleiter-Anordnung 10 in einem konstanten Abstand zu der Abdeckscheibe 6 verläuft.

Des Weiteren umfasst die Beleuchtungseinrichtung 2 mehrere Lichtquellen 14, die vorzugsweise als Halbleiterlichtquellen, insbesondere als Leuchtdioden (LEDs) ausgebildet sind. Ferner weist die Anordnung 2 eine Ansteuereinheit (nicht dargestellt) auf, welche ausgebildet ist, die einzelnen Lichtquellen 14 der einzelnen plattenförmigen Lichtleiter 12 oder die einzelnen Lichtquellen 14 aller plattenförmigen Lichtleiter 12 einzeln oder gruppenweise anzusteuern. Auf diese Weise können adaptive Lichtfunktionen, bspw. ein Lauflicht oder ein wischender Blinker realisiert werden. Dabei ist an mindestens einer Schmalseite 12a der Lichtleiter 12 jeweils mindestens eine der Lichtquellen 14 angeordnet ist, die über die mindestens eine Schmalseite 12a Licht 30 in den jeweiligen Lichtleiter 12 einkoppelt. In dem gezeigten Beispiel sind Lichtquellen 14 lediglich für den zweiten Lichtleiter 12 von hinten eingezeichnet. Es versteht sich jedoch von selbst, dass auch an mindestens einer Schmalseite 12a der anderen Lichtleiter 12 entsprechende Lichtquellen 14 angeordnet sind. In dem gezeigten Beispiel sind Lichtquellen 14 lediglich an einer Schmalseite des Lichtleiters 12 angeordnet. Selbstverständlich können die Lichtquellen 14 auch an anderen Schmalseiten des Lichtleiters 12 angeordnet sein. Ferner sind in dem Beispiel drei Lichtquellen 14 je Lichtleiter 12 eingezeichnet. Selbstverständlich kann die Anzahl der Lichtquellen 14 pro Lichtleiter 12 auch mehr oder weniger als drei sein. Des Weiteren sind die Lichtquellen 14 in dem Beispiel äquidistant zueinander angeordnet. Es ist aber auch möglich, dass die einem Lichtleiter 12 zugeordneten Lichtquellen 14 unterschiedliche Abstände zueinander haben. Die LEDs 14 können einen oder mehrere LED-Chips aufweisen. Sie können Licht 30 einer beliebigen Farbe aussenden. Es ist sogar denkbar, dass die LEDs 14 als Multicolor-LEDs ausgebildet sind, die je nach Ansteuerung Licht 30 unterschiedlicher Farbe aussenden können.

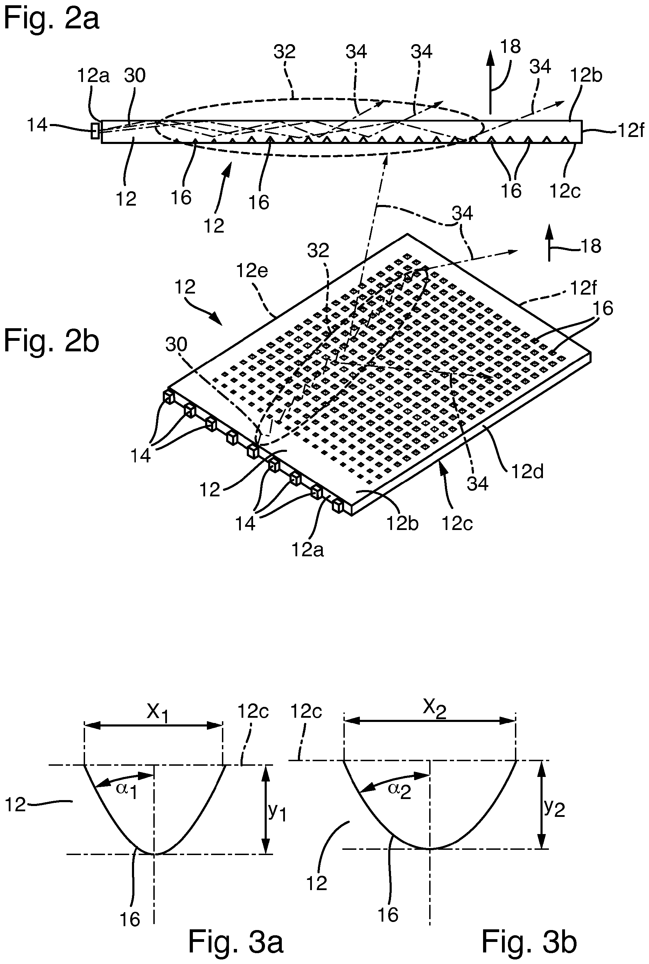

Die mindestens eine Schmalseite 12a eines Lichtleiters 12, vor der die Lichtquellen 14 angeordnet sind, bildet eine Lichteintrittsfläche des Lichtleiters 12. Das über die mindestens eine Schmalseite 12a eines Lichtleiters 12 in diesen eingekoppelte Licht 30 wird mittels Totalreflexion (vgl. den Lichtpfad 32 in Figur 2) zumindest entlang eines Teils des Lichtleiters 12 propagiert. Die Totalreflexion kann dabei an einer beliebigen Grenzfläche des Lichtleiters 12, insbesondere an einer der großen Grundflächen 12b, 12c, an einer der schmalen Längsseiten 12d, 12e und/oder an der der Eintrittsfläche 12a gegenüberliegenden Schmalseite 12f erfolgen. An der Schmalseite 12f können Prismen oder eine Verspiegelung vorgesehen sein. Das Licht 30 wird so lange an den Grenzflächen 12b bis 12f totalreflektiert, wie die Bedingungen für die Totalreflexion erfüllt sind, wonach das Licht 30 nicht zu steil auf die Grenzflächen 12b bis 12f treffen darf, da es sonst aus dem Lichtleiter 12 ausgekoppelt wird.

Jeder der Lichtleiter 12 weist entlang einer an die mindestens eine Schmalseite 12a angrenzenden Grundfläche 12c, die als Lichtauskoppelfläche dient, verteilt mehrere Auskoppelelemente 16 auf, welche zumindest einen Teil des in dem jeweiligen Lichtleiter 12 propagierten Lichts 30 auf eine gegenüberliegende Grundfläche 12b des jeweiligen Lichtleiters 12, die als Lichtaustrittsfläche dient, umlenken, so dass zumindest für einen Teil 34 des umgelenkten Lichts 30 beim Auftreffen auf die Austrittsfläche 12b die Bedingungen für Totalreflexion nicht mehr erfüllt sind und das Licht 34 über die Austrittsfläche 12b in einer Hauptaustrittsrichtung 18 aus dem Lichtleiter 12 austritt. Anhand der Figur 2b kann man gut erkennen, dass die Auskoppelelemente 16 in diesem Beispiel matrixartig über fast die gesamte Auskoppelfläche 12c des Lichtleiters 12 verteilt angeordnet sind. Der Abstand zwischen den Mittelpunkten nebeneinander angeordneter Auskoppelelemente 16 ist dabei konstant. Selbstverständlich muss der Abstand zwischen nebeneinander angeordneten Auskoppelelementen 16 nicht konstant sein, sondern kann auch unterschiedlich sein. Je größer in einem definierten Flächenbereich der Abstand zwischen benachbarten Auskoppelelementen 16 ist, desto geringer ist die Dichte der Auskoppelelemente 16 und desto dunkler erscheint dieser Bereich im eingeschalteten Zustand der Lichtquellen 14, da durch die in einem größeren Abstand zueinander angeordneten Auskoppelelemente 16 weniger Licht 34 aus dem definierten Flächenbereich des Lichtleiters 12 ausgekoppelt wird.

Die Auskoppelelemente 16 sind vorzugsweise als spitz zulaufende Vertiefungen in der Auskoppelfläche 12c oder als ein spitz zulaufender Vorsprung auf der Auskoppelfläche 12c ausgebildet. In Figur 3 sind spitz zulaufende konusförmige Auskoppelelemente 16 mit abgerundeten Spitzen als bevorzugte Ausführungsform dargestellt. Die Helligkeit eines definierten Flächenbereichs der Austrittsfläche 12b im eingeschalteten Zustand der Lichtquellen 14 kann zusätzlich oder alternativ zur Variation der Dichte der Auskoppelelemente 16 auch dadurch verändert werden, dass die Form, Größe x und/oder Tiefe y der über die Auskoppelfläche 12c des Lichtleiters 12 verteilt angeordneten Auskoppelelemente 16 variiert wird. Die Auskoppelelemente 16 können bspw. die Form eines Tetraeders (dreieckige Grundfläche), einer Pyramide (rechteckige Grundfläche), eines Prismas (rechteckige Grundfläche), eines Konus (elliptische oder kreisförmige Grundfläche) oder einer Halbkugel (runde oder elliptische Grundfläche) aufweisen. Hinsichtlich der Größe x der Auskoppelelemente 16 wird vorzugsweise die Größe der Grundfläche der Auskoppelelemente 16 in der Flächenerstreckung der Auskoppelfläche 12c variiert (vgl. Figuren 3a und 3b: x1 < x2). Hinsichtlich der Tiefe y der Auskoppelelemente 16 wird vorzugsweise der Abstand zwischen der Flächenerstreckung der Auskoppelfläche 12c um das Auskoppelelement 16 herum und einer Spitze der Vertiefung bzw. des Vorsprungs variiert. In dem Beispiel der Figur 3 sind die Tiefen y der beiden dargestellten Auskoppelelemente 16 gleich groß (y1 = y2). Auch der Winkel α der Seitenflächen der Vertiefungen könnte zur Veränderung der Helligkeit eines definierten Flächenbereichs der Austrittsfläche 12b variiert werden. In dem Beispiel der Figur 3 sind die Winkel α der beiden dargestellten Auskoppelelemente 16 gleich groß (α1 = α2). Selbstverständlich können auch mehrere der genannten Parameter der Auskoppelelemente 16 variiert werden.

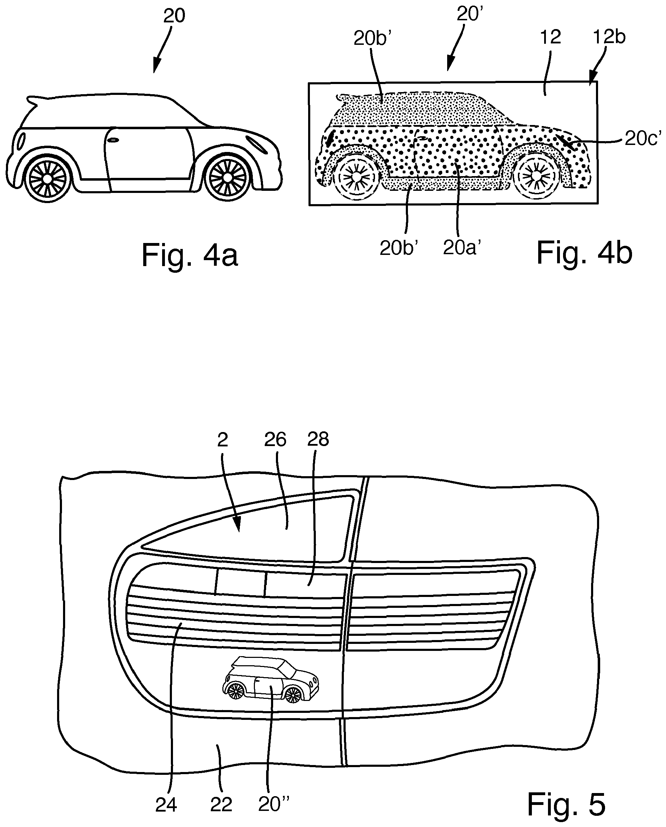

Dabei wird die Dichte, Form, Größe x und/oder Tiefe y der über die Auskoppelflächen 12c der Lichtleiter 12 verteilt angeordneten Auskoppelelemente 16 derart variiert, dass das über die Auskoppelfläche 12c bzw. die Auskoppelelemente 16 eines Lichtleiters 12 ausgekoppelte und über die Austrittsfläche 12b des Lichtleiters 12 austretende Licht 34 einen Schnitt durch ein dreidimensionales Objekt darstellt. Ein Beispiel für ein darzustellendes dreidimensionales Objekt 20 ist in Form eines Kraftfahrzeugs in Figur 4a gezeigt. In Figur 4b ist beispielhaft ein Lichtleiter 12 gezeigt, dessen Auskoppelelemente 16 derart auf der Auskoppelfläche 12c angeordnet und ausgebildet sind, dass das über die Auskoppelfläche 12c ausgekoppelte und über die Austrittsfläche 12b austretende Licht 34 eine Seitenansicht des Objekts 20 darstellt. Die Darstellung der Seitenansicht des Objekts 20 ist mit dem Bezugszeichen 20' bezeichnet. In Abhängigkeit von der Ausgestaltung und Anordnung der Auskoppelelemente 16 auf der Auskoppelfläche 12c weist die Darstellung 20' helle Bereiche 20a', graue Bereiche 20b' und dunkle Bereiche 20c' auf. Durch eine entsprechende Ausgestaltung und Anordnung der Auskoppelelemente 16 können selbstverständlich auch noch mehr Grauschattierungen in der Darstellung 20' erzielt werden.

Bei der Lichtleiter-Anordnung 10 sind die plattenförmigen Lichtleiter 12 in der Hauptabstrahlrichtung 18 hintereinander angeordnet (vgl. Figur 1). In jedem der Lichtleiter 12 sind die Auskoppelelemente 16 derart auf der Lichtauskoppelfläche 12c ausgebildet, dass das ausgekoppelte und über die Lichtaustrittsfläche 12b des jeweiligen Lichtleiters 12 austretende Licht 34 eine Schnittdarstellung 20' des Objekts 20 darstellt. Dabei weisen die plattenförmigen Lichtleiter 12 jeweils unterschiedlich angeordnete Lichtauskoppelelemente 16 auf, um bei einem Betrachter einen dreidimensionalen Effekt der Darstellung 20' des Objekts 20 erzielen zu können. Die Hauptabstrahlrichtungen 18 des aus den einzelnen Lichtleitern 12 austretenden Lichts 34 sind in den gleichen Halbraum bezüglich einer zu einer Flächenerstreckung der Lichtleiter 12 parallelen Ebene gerichtet. Die Summe des aus allen Lichtleitern 12 der Anordnung 10 austretenden Lichts 34 und damit eine Überlagerung der Schnittdarstellungen 20' stellt zumindest näherungsweise das dreidimensionale Objekt 20 dar. Die dreidimensionale Darstellung ist in ihrer Gesamtheit mit dem Bezugszeichen 20" bezeichnet und in Figur 5 gezeigt. Das aus den hinteren Lichtleitern 12 ausgekoppelte Licht 34 tritt durch die transparenten Flächen der davor angeordneten Lichtleiter 12, d.h. durch die in der Hauptabstrahlrichtung 18 den hinteren Lichtleitern 12 jeweils nachgeordneten Lichtleiter 12 hindurch, so dass sich für einen Beobachter bei einem Blick in die Leuchte 2 die dreidimensionale Darstellung 20" des Objekts 20 ergibt. Bei der Erzeugung einfacher dreidimensionaler Geometrien können alle plattenförmigen Lichtleiter 12 die gleiche Anordnung der Lichtauskoppelelemente aufweisen, wobei die Auskoppelelemente-Muster auf den verschiedenen Lichtleiterplatten 12 geringfügig zueinander versetzt sein können.

Figur 5 zeigt die Kraftfahrzeugheckleuchte 2 in einem in das Kraftfahrzeug 22 eingebauten Zustand. Außer der Lichtleiter-Anordnung 10, welche die dreidimensionale Darstellung 20" des Objekts 20 erzeugt, kann die Leuchte 2 auch noch über andere Lichtmodule zur Erzeugung bestimmter Signallichtfunktionen verfügen. So weist die Heckleuchte 2 aus dem dargestellten Beispiel bspw. ein Modul 24 zur Erzeugung eines Rücklichts und/oder eines Bremslichts, ein Modul 26 zur Erzeugung eines Blinklichts und ein Modul 28 zur Erzeugung eines Rückfahrlichts auf.

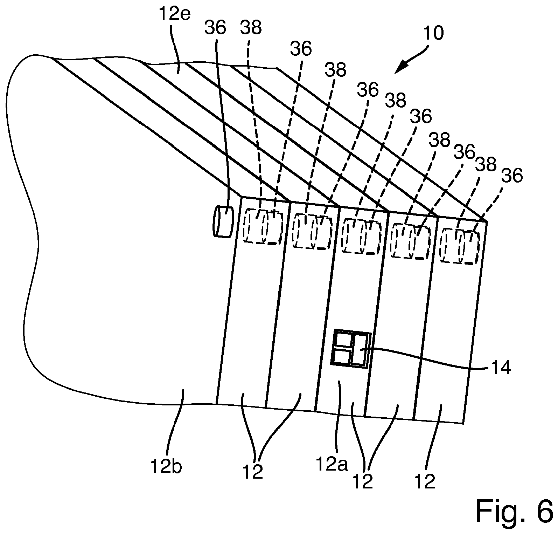

In Figur 6 ist ein Ausschnitt der Lichtleiter-Anordnung 10 dargestellt. Dabei sind die einzelnen plattenförmigen Lichtleiter 12 mittels auf der Austrittsfläche 12b der Lichtleiter 12 ausgebildeter Stifte 36, die mit auf der Auskoppelfläche 12c der Lichtleiter 12 ausgebildeten Vertiefungen 38 zusammenwirken, positioniert. Dabei greifen die Stifte 36 eines Lichtleiters 12 in die Vertiefungen 38 eines unmittelbar benachbarten Lichtleiters 12 ein. Auf diese Weise ist eine einfache aber genaue Montage der Lichtleiter-Anordnung 10 möglich. Wenn die Stifte 36 mittels Presspassung in die Vertiefungen 38 eingeführt werden, sind die Lichtleiter 12 auch gleich noch aneinander befestigt. Alternativ wäre es aber auch denkbar, die Lichtleiter 12 auf andere Weise aneinander zu befestigen, wobei beachtet werden muss, dass durch die Befestigung die Bedingungen für die Totalreflexion an den Grenzflächen nicht verletzt werden, da dies zu einem unerwünschten und unkontrollierten Auskoppeln von Licht aus dem Lichtleiter 12 führen würde. Die einzelnen Lichtleiter 12 können mit hoher Genauigkeit einfach, schnell und kostengünstig mittels eines Spritzgussverfahrens hergestellt werden.

Des Weiteren wäre es denkbar, die Lichtleiter-Anordnung 10 mit einem farbigen Hintergrund zu versehen. Dabei könnte die hintere Grundfläche 12c der hintersten Lichtleiterplatte 12 oder die gesamte hinterste Lichtleiterplatte 12 farbig ausgestaltet sein. Es wäre auch denkbar, im Hintergrund der Lichtleiter-Anordnung 10 einen Reflektor oder eine reflektierende Fläche, bspw. eine metallische Fläche, ohne eigene, dem Reflektor zugeordnete Lichtquelle anzuordnen. Ferner wäre es denkbar, im Hintergrund eine oder mehrere Lichtquellen anzuordnen, bspw. in Form von LEDs. Diese können komplementär oder versetzt zur Anordnung der Auskoppelelemente 16 der plattenförmigen Lichtleiter 12 positioniert sein.

## Patentansprüche

1. Beleuchtungseinrichtung (2) eines Kraftfahrzeugs (22) mit einer Vorrichtung, umfassend ein Gehäuse (4) mit einer mittels einer Abdeckscheibe (6) verschlossenen Lichtaustrittsöffnung (8), wobei die Vorrichtung in dem Gehäuse (4) angeordnet ist, umfassend mehrere hintereinander angeordnete plattenförmige Lichtleiter (12) aus einem massiven transparenten Material, wobei an mindestens einer Schmalseite (12a) der Lichtleiter (12) jeweils mindestens eine Lichtquelle (14) angeordnet ist, die Licht (30) in den jeweiligen Lichtleiter (12) einkoppelt, das mittels Totalreflexion zumindest durch einen Teil (32) des Lichtleiters (12) propagiert, wobei jeder der Lichtleiter (12) über eine an die mindestens eine Schmalseite (12a) angrenzende Grundfläche (12c), die als Auskoppelfläche dient, verteilt mehrere Auskoppelelemente (16) aufweist, welche zumindest einen Teil (34) des in dem jeweiligen Lichtleiter (12) propagierten Lichts (32) auf eine gegenüberliegende Grundfläche (12b) des jeweiligen Lichtleiters (12), die als Austrittsfläche dient, umlenken, so dass zumindest für einen Teil (34) des umgelenkten Lichts beim Auftreffen auf die Austrittsfläche (12b) die Bedingungen für Totalreflexion nicht mehr erfüllt sind und das Licht (34) über die Austrittsfläche (12b) aus dem Lichtleiter (12) austritt, wobei die Lichtleiter (12) derart hintereinander angeordnet sind, dass die Hauptabstrahlrichtungen (18) des aus den einzelnen Lichtleitern (12) austretenden Lichts (34) in den gleichen Halbraum bezüglich einer zu einer Flächenerstreckung der Lichtleiter (12) parallelen Ebene gerichtet sind, wobei die Form, Größe, Tiefe und/oder Dichte der über die Auskoppelflächen (12c) der Lichtleiter (12) verteilt angeordneten Auskoppelelemente (16) für jeden der Lichtleiter (12) derart ausgebildet sind, dass das über die Auskoppelelemente (16) eines Lichtleiters (12) ausgekoppelte und über die Austrittsfläche (12b) des Lichtleiters (12) austretende Licht (34) eine Schnittdarstellung (20') durch ein dreidimensionales Objekt (20) darstellt, wobei das aus den verschiedenen Lichtleitern (12) austretende Licht verschiedene Schnittdarstellungen (20') des Objekts (20) und die Summe des aus allen Lichtleitern (12) der Vorrichtung austretenden Lichts (34) und damit eine Überlagerung der Schnittdarstellungen (20') näherungsweise eine dreidimensionale Darstellung (20") des Objekts (20) darstellt.

2. Beleuchtungseinrichtung (2) nach Anspruch 1, **dadurch gekennzeichnet, dass** die Auskoppelelemente (16) als Vertiefungen in der Auskoppelfläche (12c) der Lichtleiter (12) ausgebildet sind.

3. Beleuchtungseinrichtung (2) nach Anspruch 2, **dadurch gekennzeichnet, dass** die Auskoppelelemente (16) als konusförmige Vertiefungen in der Auskoppelfläche (12c) der Lichtleiter (12) ausgebildet sind.

4. Beleuchtungseinrichtung (2) nach Anspruch 3, **dadurch gekennzeichnet, dass** die kegel- oder konusförmigen Vertiefungen abgerundete Spitzen aufweisen.

5. Beleuchtungseinrichtung (2) nach einem der Ansprüche 1 bis 4, **dadurch gekennzeichnet, dass** jedem der plattenförmigen Lichtleiter (12) mehrere Lichtquellen (14) entlang der mindestens einen Schmalseite (12a) des Lichtleiters (12) zugeordnet sind.

6. Beleuchtungseinrichtung (2) nach Anspruch 5, **dadurch gekennzeichnet, dass** die Vorrichtung eine Ansteuereinheit aufweist, welche ausgebildet ist, die einzelnen Lichtquellen (14) der einzelnen plattenförmigen Lichtleiter (12) oder die einzelnen Lichtquellen (14) aller plattenförmigen Lichtleiter (12) einzeln anzusteuern.

7. Beleuchtungseinrichtung (2) nach einem der Ansprüche 1 bis 6, **dadurch gekennzeichnet, dass** auf den Schmalseiten (12a) der Lichtleiter (12), den Lichtquellen (14) jeweils zugeordnete Einkoppeloptiken zum Bündeln des von den Lichtquellen (14) ausgesandten Lichts ausgebildet sind.

8. Beleuchtungseinrichtung (2) nach einem der Ansprüche 1 bis 7, **dadurch gekennzeichnet, dass** die einzelnen plattenförmigen Lichtleiter (12) der Vorrichtung zumindest bereichsweise um eine gemeinsame Biegeachse gebogen sind.

9. Beleuchtungseinrichtung (2) nach einem der Ansprüche 1 bis 8, **dadurch gekennzeichnet, dass** die Flächenerstreckung der Lichtleiter (12) um eine gemeinsame imaginäre Biegeachse gebogen oder gewölbt ist.

10. Beleuchtungseinrichtung (2) nach einem der Ansprüche 1 bis 9, **dadurch gekennzeichnet, dass** die einzelnen plattenförmigen Lichtleiter (12) mittels auf einer der Grundflächen (12b; 12c) der Lichtleiter (12) ausgebildeter Stifte (36), die mit auf der anderen Grundfläche (12c; 12b) der Lichtleiter (12) ausgebildeten Vertiefungen (38) zusammenwirken, relativ zueinander positioniert sind.

11. Beleuchtungseinrichtung (2) nach Anspruch 10, **dadurch gekennzeichnet, dass** die Stifte (36) mittels Presspassung in die Vertiefungen (38) eingeführt sind, so dass die Lichtleiter (12) aneinander befestigt sind.

12. Beleuchtungseinrichtung (2) nach einem der Ansprüche 1 bis 11, **dadurch gekennzeichnet, dass** die Beleuchtungseinrichtung (2) als eine Heckleuchte des Kraftfahrzeugs (22) ausgebildet ist.

13. Beleuchtungseinrichtung (2) nach Anspruch 11 oder 12, **dadurch gekennzeichnet, dass** die Lichtquellen (14) als Halbleiterlichtquellen, insbesondere als Leuchtdioden, ausgebildet sind.

14. Beleuchtungseinrichtung (2) nach einem der Ansprüche 11 bis 13, **dadurch gekennzeichnet, dass** die Lichtquellen (14) Licht unterschiedlicher Farben aussenden.

15. Beleuchtungseinrichtung (2) nach einem der Ansprüche 11 bis 14, **dadurch gekennzeichnet, dass** die Lichtquellen (14) dimmbar sind.

16. Beleuchtungseinrichtung (2) nach einem der Ansprüche 11 bis 15, **dadurch gekennzeichnet, dass** im Strahlengang des von den Lichtquellen (14) ausgesandten Lichts (30) Bündelungsoptiken zur Bündelung des ausgesandten Lichts (30) bevor es auf die mindestens eine Schmalseite (12a) des jeweiligen Lichtleiters (12) fällt angeordnet sind.

## Claims

1. Lighting apparatus (2) of a motor vehicle (22) having a device, comprising a housing (4) having a light outlet opening (8) which is closed by means of a cover plate (6), wherein the device is arranged in the housing (4), comprising a plurality of planar light guides (12) which are arranged one behind the other and are made of a solid transparent material, wherein in each case at least one light source (14) is arranged on at least one narrow side (12a) of the light guides (12), which light source couples light (30) into the relevant light guide (12), which propagates at least through a part (32) of the light guide (12) by means of total reflection, wherein each of the light guides (12) has a plurality of outcoupling elements (16) distributed over a main surface (12c) which adjoins the narrow side (12a) and is used as an outcoupling surface, which outcoupling elements deflect at least a portion (34) of the light (32) propagated in the relevant light guide (12) onto an opposing main surface (12b) of the relevant light guide (12), which is used as the exit surface, such that, at least for a portion (34) of the deflected light, the conditions for total reflection are no longer met when impinging on the exit surface (12b), and the light (34) exits the light guide (12) via the exit surface (12b), wherein the light guides (12) are arranged one behind the other such that the main emission directions (18) of the light (34) exiting the individual light guides (12) are directed into the same half-space with respect to a plane parallel to a surface extension of the light guides (12), wherein, for each of the light guides (12), the shape, size, depth and/or density of the outcoupling elements (16), which are arranged distributed over the outcoupling surfaces (12c) of the light guides (12), are designed such that the light (34) coupled out via the outcoupling elements (16) of a light guide (12) and exiting via the exit surface (12b) of the light guide (12) shows a sectional representation (20') through a three-dimensional object (20), wherein the light exiting the different light guides (12) shows different sectional representations (20')of the object (20), and the combination of the light (34) exiting all of the light guides (12) of the device, and thus a superposition of the sectional representations (20'), approximately shows a three-dimensional representation (20") of the object (20).

2. Lighting apparatus (2) according to claim 1, **characterized in that** the outcoupling elements (16) are designed as recesses in the outcoupling surface (12c) of the light guides (12).

3. Lighting apparatus (2) according to claim 2, **characterized in that** the outcoupling elements (16) are designed as conical recesses in the outcoupling surface (12c) of the light guides (12).

4. Lighting apparatus (2) according to claim 3, **characterized in that** the conical or tapered recesses have rounded tips.

5. Lighting apparatus (2) according to any of claims 1 to 4, **characterized in that** a plurality of light sources (14) along the at least one narrow side (12a) of the light guide (12) are assigned to each of the planar light guides (12).

6. Lighting apparatus (2) according to claim 5, **characterized in that** the device has a control unit which is designed to control the individual light sources (14) of the individual planar light guides (12) or the individual light sources (14) of all of the planar light guides (12) individually.

7. Lighting apparatus (2) according to any of claims 1 to 6, **characterized in that** coupling optics, which are in each case assigned to the light sources (14), for bundling the light emitted by the light sources (14) are formed on the narrow sides (12a) of the light guides (12).

8. Lighting apparatus (2) according to any of claims 1 to 7, **characterized in that** the individual planar light guides (12) of the device are bent at least in regions about a common bending axis.

9. Lighting apparatus (2) according to any of claims 1 to 8, **characterized in that** the surface extension of the light guides (12) is bent or curved about a common imaginary bending axis.

10. Lighting apparatus (2) according to any of claims 1 to 9, **characterized in that** the individual planar light guides (12) are positioned relative to one another by means of pins (36) which are formed on one of the main surfaces (12b; 12c) of the light guides (12) and interact with recesses (38) formed on the other main surface (12c; 12b) of the light guides (12).

11. Lighting apparatus (2) according to claim 10, **characterized in that** the pins (36) are inserted into the recesses (38) by means of a press fit, so that the light guides (12) are fastened to one another.

12. Lighting apparatus (2) according to any of claims 1 to 11, **characterized in that** the lighting apparatus (2) is designed as a rear light of the motor vehicle (22).

13. Lighting apparatus (2) according to either claim 11 or claim 12, **characterized in that** the light sources (14) are designed as semiconductor light sources, in particular as light-emitting diodes.

14. Lighting apparatus (2) according to any of claims 11 to 13, **characterized in that** the light sources (14) emit light of different colors.

15. Lighting apparatus (2) according to any of claims 11 to 14, **characterized in that** the light sources (14) are dimmable.

16. Lighting apparatus (2) according to any of claims 11 to 15, **characterized in that** bundling optics for bundling the emitted light (30) before it impinges on the at least one narrow side (12a) of the relevant light guide (12) are arranged in the beam path of the light (30) emitted by the light sources (14).

## Revendications

1. Dispositif d'éclairage (2) d'un véhicule automobile (22) avec un dispositif, comprenant un boîtier (4) avec une ouverture de sortie de lumière (8) fermée au moyen d'une plaque de recouvrement (6), dans lequel le dispositif est disposé dans le boîtier (4), comprenant plusieurs guides de lumière (12) en forme de plaque, disposés les uns derrière les autres, composés d'un matériau transparent massif, dans lequel respectivement au moins une source lumineuse (14) est disposée sur au moins un petit côté (12a) des guides de lumière (12), qui injecte de la lumière (30) dans le guide de lumière (12) respectif, qui se propage par réflexion totale au moins à travers une partie (32) du guide de lumière (12), dans lequel chacun des guides de lumière (12) présente, répartis sur une surface de base (12c) adjacente à l'au moins un petit côté (12a), qui sert de surface d'extraction, plusieurs éléments d'extraction (16), lesquels dirigent au moins une partie (34) de la lumière (32) propagée dans le guide de lumière (12) respectif sur une surface de base (12b) opposée du guide de lumière (12) respectif, qui sert de surface de sortie, de sorte qu'au moins pour une partie (34) de la lumière déviée, les conditions de réflexion totale ne sont plus remplies lorsqu'elle arrive sur la surface de sortie (12b) et que la lumière (34) sort du guide de lumière (12) par la surface de sortie (12b), dans lequel les guides de lumière (12) sont disposés les uns derrière les autres de telle sorte que les directions principales de rayonnement (18) de la lumière (34) sortant des guides de lumière (12) individuels sont dirigées dans le même demi-espace par rapport à un plan parallèle à une extension de surface des guides de lumière (12), dans lequel la forme, la taille, la profondeur et/ou la densité des éléments d'extraction (16) disposés de manière répartie sur les surfaces d'extraction (12c) des guides de lumière (12) sont réalisées pour chacun des guides de lumière (12) de telle sorte que la lumière (34) extraite par les éléments d'extraction (16) d'un guide de lumière (12) et sortant par la surface de sortie (12b) du guide de lumière (12) représente une représentation en coupe (20') à travers un objet tridimensionnel (20), dans lequel la lumière sortant des différents guides de lumière (12) représente différentes représentations en coupe (20') de l'objet (20) et la somme de la lumière (34) sortant de tous les guides de lumière (12) du dispositif et donc une superposition des représentations en coupe (20') approximativement une représentation tridimensionnelle (20") de l'objet (20).

2. Dispositif d'éclairage (2) selon la revendication 1, **caractérisé en ce que** les éléments d'extraction (16) sont réalisés sous forme de cavités dans la surface d'extraction (12c) des guides de lumière (12).

3. Dispositif d'éclairage (2) selon la revendication 2, **caractérisé en ce que** les éléments d'extraction (16) sont réalisés sous forme de cavités coniques dans la surface d'extraction (12c) des guides de lumière (12).

4. Dispositif d'éclairage (2) selon la revendication 3, **caractérisé en ce que** les cavités en forme de cône ou coniques présentent des pointes arrondies.

5. Dispositif d'éclairage (2) selon l'une quelconque des revendications 1 à 4, **caractérisé en ce que** chacun des guides de lumière (12) en forme de plaque est associé à plusieurs sources lumineuses (14) le long de l'au moins un petit côté (12a) du guide de lumière (12).

6. Dispositif d'éclairage (2) selon la revendication 5, **caractérisé en ce que** le dispositif présente une unité de commande, laquelle est réalisée pour commander individuellement les sources lumineuses (14) individuelles des guides de lumière (12) individuels en forme de plaque ou les sources lumineuses (14) individuelles de tous les guides de lumière (12) en forme de plaque.

7. Dispositif d'éclairage (2) selon l'une quelconque des revendications 1 à 6, **caractérisé en ce que** sur les côtés étroits (12a) des guides de lumière (12), des optiques d'injection associées respectivement aux sources lumineuses (14) sont réalisées pour concentrer la lumière émise par les sources lumineuses (14).

8. Dispositif d'éclairage (2) selon l'une quelconque des revendications 1 à 7, **caractérisé en ce que** les guides de lumière (12) individuels en forme de plaque du dispositif sont pliés au moins par zones autour d'un axe de pliage commun.

9. Dispositif d'éclairage (2) selon l'une quelconque des revendications 1 à 8, **caractérisé en ce que** l'extension de surface des guides de lumière (12) est courbée ou bombée autour d'un axe de flexion imaginaire commun.

10. Dispositif d'éclairage (2) selon l'une quelconque des revendications 1 à 9, **caractérisé en ce que** les guides de lumière (12) individuels en forme de plaque sont positionnés les uns par rapport aux autres au moyen de broches (36) réalisées sur une des surfaces de base (12b ; 12c) des guides de lumière (12), qui coopèrent avec des cavités (38) réalisées sur l'autre surface de base (12c ; 12b) des guides de lumière (12).

11. Dispositif d'éclairage (2) selon la revendication 10, **caractérisé en ce que** les broches (36) sont introduites dans les cavités (38) par ajustement avec serrage, de sorte que les guides de lumière (12) sont fixés les uns aux autres.

12. Dispositif d'éclairage (2) selon l'une quelconque des revendications 1 à 11, **caractérisé en ce que** le dispositif d'éclairage (2) est réalisé en tant que feu arrière du véhicule automobile (22).

13. Dispositif d'éclairage (2) selon la revendication 11 ou 12, **caractérisé en ce que** les sources lumineuses (14) sont réalisées en tant que sources lumineuses à semiconducteur, en particulier en tant que diodes électroluminescentes.

14. Dispositif d'éclairage (2) selon l'une quelconque des revendications 11 à 13, **caractérisé en ce que** les sources lumineuses (14) émettent une lumière de différentes couleurs.

15. Dispositif d'éclairage (2) selon l'une quelconque des revendications 11 à 14, **caractérisé en ce que** l'intensité des sources lumineuses (14) peut être atténuée.

16. Dispositif d'éclairage (2) selon l'une quelconque des revendications 11 à 15, **caractérisé en ce que** des optiques de concentration sont disposées dans le trajet de la lumière (30) émise par les sources lumineuses (14) pour concentrer la lumière émise (30) avant qu'elle ne tombe sur l'au moins un petit côté (12a) du guide de lumière (12) respectif.
